# FASCICULE DE BREVET EUROPEEN

(11) **EP 2 939 178 B1**
(45) Date de publication et mention de la délivrance du brevet: **01.04.2020**
(21) Numéro de dépôt: 13805407.7
(22) Date de dépôt: 16.12.2013
(51) Int. Cl.: G06K 9/00, G06K 9/03

(54) **PROCÉDÉ D'ANALYSE DE RÉGIONS GÉOGRAPHIQUES ET DE DÉTECTION DE ZONES D'INTÉRÊT**
VERFAHREN ZUR ANALYSE GEOGRAFISCHER GEBIETE UND ZUR ERKENNUNG VON INTERESSEBEREICHEN
METHOD FOR ANALYSING GEOGRAPHICAL REGIONS AND DETECTING AREAS OF INTEREST

(30) Priorité: 31.12.2012 FR 1263000
(43) Date de publication de la demande: 04.11.2015
(73) Titulaire: AIRBUS (SAS), 31700 Blagnac (FR)
(72) Inventeur: BOURDIS, Nicolas, F-92800 Puteaux (FR); MARRAUD, Denis, F-92130 Issy Les Moulineaux (FR)
(74) Mandataire: Gicquel, Olivier Yves Gérard
(86) Numéro de dépôt international: PCT/EP2013/076714
(87) Numéro de publication internationale: WO 2014/102081

(56) Documents cités:
- Nicolas Bourdis ET AL: "Exploitation de vidéos aériennes multiples pour la détection de changements Département Traitement du Signal et des Images Groupe TII : Traitement et Interprétation des Images", Télécom ParisTech D (rapports de recherche), 1 janvier 2011 (2011-01-01), pages 1-19, XP055087098, Paris, France Extrait de l'Internet: URL:http://service.tsi.telecom-paristech.f r/cgi-bin/valipub_download.cgi?dId=238 [extrait le 2013-11-07]
- NICOLAS BOURDIS ET AL: "Spatio-temporal interaction for aerial video change detection", GEOSCIENCE AND REMOTE SENSING SYMPOSIUM (IGARSS), 2012 IEEE INTERNATIONAL, IEEE, 22 juillet 2012 (2012-07-22), pages 2253-2256, XP032468890, DOI: 10.1109/IGARSS.2012.6351049 ISBN: 978-1-4673-1160-1
- NICOLAS BOURDIS ET AL: "Constrained optical flow for aerial image change detection", GEOSCIENCE AND REMOTE SENSING SYMPOSIUM (IGARSS), 2011 IEEE INTERNATIONAL, IEEE, 24 juillet 2011 (2011-07-24), pages 4176-4179, XP032061878, DOI: 10.1109/IGARSS.2011.6050150 ISBN: 978-1-4577-1003-2
- NICOLAS BOURDIS ET AL: "Camera pose estimation using Visual Servoing for aerial video change detection", GEOSCIENCE AND REMOTE SENSING SYMPOSIUM (IGARSS), 2012 IEEE INTERNATIONAL, IEEE, 22 juillet 2012 (2012-07-22), pages 3459-3462, XP032468606, DOI: 10.1109/IGARSS.2012.6350676 ISBN: 978-1-4673-1160-1
- Nicolas Bourdis: "Détection de changements entre vidéos aériennes avec trajectoires arbitraires (thèse de doctorat)", , 17 juin 2013 (2013-06-17), pages 1-191, XP055087165, Paris Extrait de l'Internet: URL:http://tel.archives-ouvertes.fr/docs/0 0/83/47/17/PDF/ManuscritTheseNBo.pdf [extrait le 2013-11-07]
- C. Heipke: "Data Acquisition, Automation" In: Shashi Shekar et Hui Xiong: "Encylopedia of GIS", 1 janvier 2008 (2008-01-01), Springer, XP002717927, pages 197-200, le document en entier
- C.-C. Chen: "Conflation of Geospatial Data" In: Shashi Shekar et Hui Xiong: "Encylopedia of GIS", 1 janvier 2008 (2008-01-01), Springer, XP002717928, pages 133-144, le document en entier
- S. Seth: "Conflation of Features" In: Shashi Shekar et Hui Xiong: "Encylopedia of GIS", 1 janvier 2008 (2008-01-01), Springer, XP002717929, pages 129-133, le document en entier
- J. Théau: "chap. 7 Change Detection" In: Wolfgang Kresse et David M Danko: "Springer Handbook of Geographic Information", 1 janvier 2012 (2012-01-01), Springer, XP002717930, pages 175-184, le document en entier
- D.M. Danko: "chap. 12 Geospatial Metadata" In: Wolfgang Kresse et David M Danko: 1 janvier 2008 (2008-01-01), Springer, XP002717931, pages 359-391, le document en entier
- R.D. Eastman et al: "chap.3 Survey of Image Registration Methods" In: Jacqueline Le Moigne et al: "Image Registration for Remote Sensing", 1 janvier 2011 (2011-01-01), Cambridge University, XP002717932, pages 35-76, le document en entier
- Florence Turpin: "chap. 6 Fusion of Optical and SAR images" In: Uwe Soergel: "Radar Remote Sensing of Urban Areas", 1 janvier 2012 (2012-01-01), Springer, XP002717933, pages 133-159, le document en entier
- A.H.S. Solberg: "chap. 11 Data Fusion for Remote-Sensing Applications" In: C.H. Chen: "Signal and Image Processing for Remote Sensing", 1 janvier 2008 (2008-01-01), CRC, XP002717934, pages 249-271, le document en entier
- DANIEL CRISPELL ET AL: "A Variable-Resolution Probabilistic Three-Dimensional Model for Change Detection", IEEE TRANSACTIONS ON GEOSCIENCE AND REMOTE SENSING, IEEE SERVICE CENTER, PISCATAWAY, NJ, US, vol. 50, no. 2, 1 février 2012 (2012-02-01), pages 489-500, XP011397739, ISSN: 0196-2892, DOI: 10.1109/TGRS.2011.2158439
- MITTAL ANURAG ET AL: "Scene modeling for wide area surveillance and image synthesis", PROC. OF THE IEEE COMPUTER SOCIETY CONF. ON COMPUTER VISION AND PATTERN RECOGNITION 2000 IEEE, LOS ALAMITOS, CA, USA,, vol. 2, 13 juin 2000 (2000-06-13), pages 160-167, XP002481519,

## Description

L'invention appartient au domaine des calculs de télédétection, et concerne plus particulièrement un procédé d'analyse de régions géographiques et de détection de zones d'intérêt à partir de données numériques.

Selon l'art antérieur, un procédé d'analyse de données numériques, telles que des images ou des vidéos, est utilisé pour assister un opérateur à interpréter lesdites données numériques. Les données numériques correspondent à des régions géographiques et sont issues de capteurs positionnés sur des plateformes d'observation telles que des drones, des avions, des hélicoptères ou des satellites observant lesdites régions géographiques.

Ledit procédé permet de détecter à partir desdites données numériques une zone d'intérêt c'est-à-dire une partie d'une région géographique ayant un aspect inhabituel. À cet effet, ledit procédé comporte une phase d'apprentissage durant laquelle une base de connaissances regroupant lesdites données numériques est créée et une étape de détection de zones d'intérêt.

Dans de nombreux cas opérationnels, une plateforme d'observation effectue des observations fréquentes et récurrentes d'une même région géographique. Cette réitération d'observation implique qu'un important volume de données numérique est généré par la plateforme d'observation. Cet important volume de données numérique permet de connaître précisément chaque région géographique. Cependant, cet important volume de données rend difficile l'interprétation desdites données. En effet, une recherche de donnée dans un tel volume de données n'est pas efficace et la visualisation dudit volume de données n'est pas aisée.

On connaît dans l'art antérieur la publication de Crispell et al., A variable-Resolution Probabilistic Three-Dimensional Model for Change Detection, IEEE Transactions on geoscience and remote sensing, IEEE Service Center, Vol 50, n°2, février 2012, p.489-500. La publication de Crispell décrit un procédé basé sur un modèle probabiliste.

On connaît aussi la publication de Mittal et al., Scene Modeling for Wide Area Surveillance and Image Synthesis, Proc. of the IEEE Computer Society Conférence on computer vision and pattern récognition 2000 IEEE, vol. 2, p.160-167. La publication de Mittal décrit un algorithme pour la surveillance et le monitoring de larges zones, basé sur des modèles gaussiens.

On connaît également dans l'art antérieur le rapport de recherche de N. Bourdis et al. intitulé « Exploitation de vidéos aériennes multiples pour la détection de changements », publié par Télécom ParisTech en juillet 2011. Ce rapport de recherche effectué dans le cadre de la thèse de N. Bourdis, étudie l'intérêt de la détection automatique de changements entre plusieurs données vidéos pour la focalisation de l'attention des opérateurs dans le cadre de l'observation aérienne. Le travail de thèse de N. Bourdis a également fait l'objet de plusieurs publications :
- Nicolas Bourdis et al., Spatio-temporal interaction for aerial video change detection, Geoscience and remote sensing symposium (IGARSS), 2012 IEEE International, juillet 2012 ;
- Nicolas Bourdis et al., Constrained optical flow for aerial image change detection, Geoscience and remote sensing symposium (IGARSS), 2011 IEEE International, juillet 2011 ;
- Nicolas Bourdis et al., Camera pose estimation using Visual Servoing for aerial video change detection, Geoscience and remote sensing symposium (IGARSS), 2012 IEEE International, juillet 2012.

L'invention a notamment pour but de résoudre tout ou partie des problèmes susmentionnés.

À cette fin, l'invention concerne un procédé semi-automatique d'analyse de régions géographiques et de détection de zones d'intérêt par un moyen d'exploration comportant un capteur et un centre de traitement de données numériques selon la revendication 1.

L'invention sera mieux comprise à la lecture de la description suivante, donnée à titre d'exemple nullement limitatif, et faite en se référant aux figures qui représentent :
- Figure 1 : un diagramme fonctionnel montrant différentes étapes d'une phase apprentissage de l'aspect intrinsèque de chaque région géographique du procédé selon un exemple de réalisation de l'invention ;
- Figure 2 : un diagramme fonctionnel montrant différentes étapes d'une phase de détection de zones d'intérêt dans les régions géographiques du procédé selon un exemple de réalisation de l'invention ;
- Figure 3 : une représentation schématique de régions géographiques, d'un moyen d'exploration et un centre de traitement de données numériques selon un exemple de réalisation de l'invention.

Dans ces figures, des références identiques d'une figure à une autre désignent des éléments identiques ou analogues. Pour des raisons de clarté, les éléments représentés ne sont pas à l'échelle, sauf mention contraire.

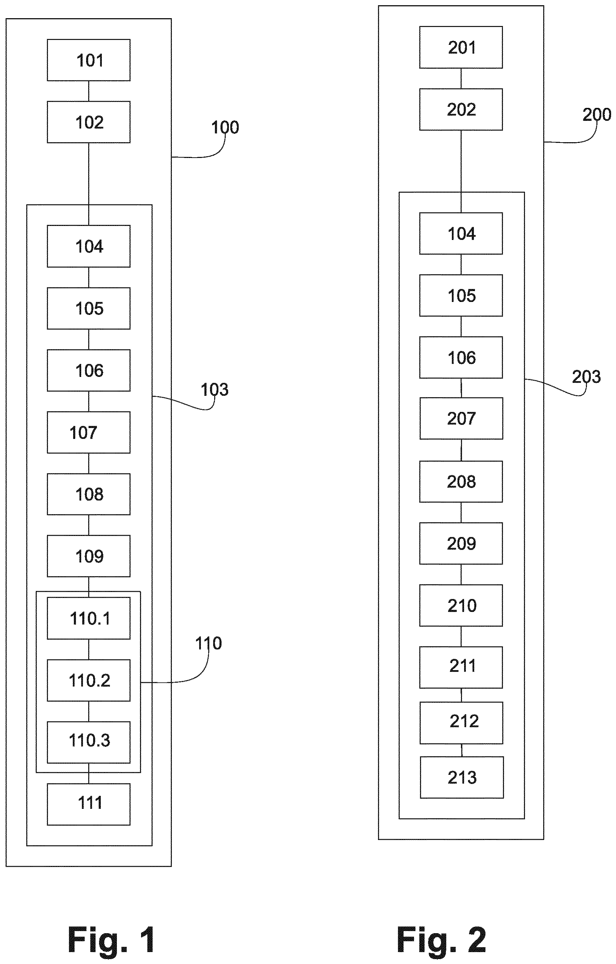

La figure 1 montre les différentes étapes du procédé d'analyse de régions géographiques 300 et de détection de zones d'intérêt 301 par un moyen d'exploration 310 comportant un capteur 311, et un centre de traitement de données numériques 312. Ledit procédé aide un opérateur à interpréter des données numériques. Plus précisément, ledit procédé alerte l'opérateur lorsqu'il détecte, en analysant une donnée numérique, une zone d'intérêt 301 dans une région géographique 300.

Une zone d'intérêt 301 est ici une partie d'une région géographique 300 ayant un aspect inhabituel. Par exemple, l'apparition d'un objet dans une région géographique 300 habituellement déserte définit une zone d'intérêt 301.

Le procédé comporte deux phases 100 et 200. La première phase 100 est une phase 100 d'apprentissage de l'aspect intrinsèque de chaque région géographique 300. La seconde phase 200 est une phase 200 de détection de zones d'intérêt 301 dans les régions géographiques 300.

Une base de connaissance 313 est constituée lors de ladite première phase 100, ladite base de connaissance 313 comportant plusieurs groupes de données numériques. À cet effet, la première phase 100 comporte une étape 101, dans laquelle le capteur 311 acquiert une donnée numérique correspondant à une région géographique 300 au moyen du capteur 311. Le capteur 311 est par exemple une caméra, un appareil photographique, ou un radar. Le moyen d'exploration 310 est une plateforme d'observation telle qu'un drone, un hélicoptère, un ballon, un avion, un satellite ou une plateforme terrestre d'observation sans que cette liste ne soit exhaustive.

La première phase 100 comporte ensuite une étape 102 de transmission de la donnée numérique acquise à l'étape 101 au centre de traitement de données numériques 312.

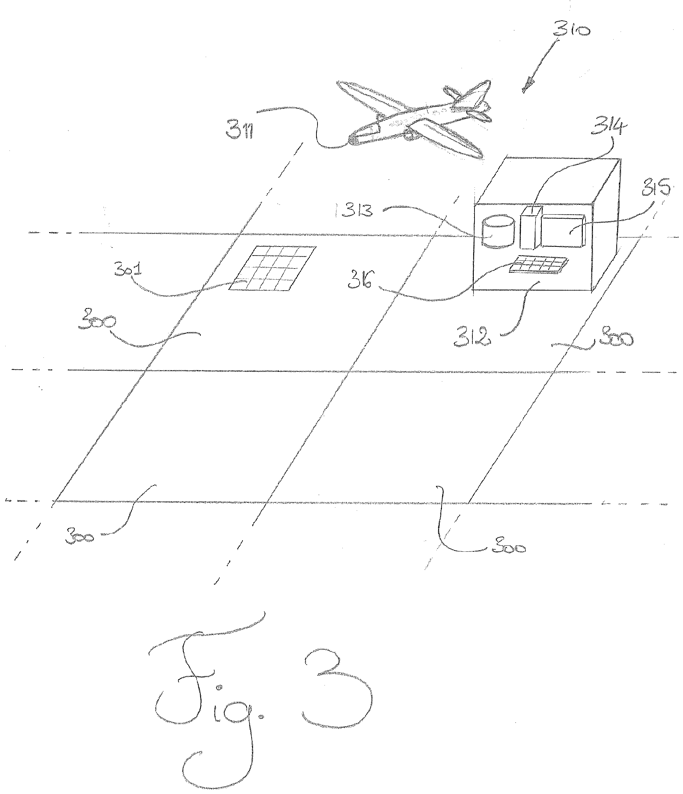

Figure 3, selon un exemple de réalisation, ledit centre de traitement de données numériques 312 est distant du moyen d'exploration 310. En variante, ledit centre de traitement de données numériques 312 est inclus dans le moyen d'exploration 310. Le centre de traitement des données numériques 312 comporte la base de connaissance 313, des moyens de calcul 314, des moyens d'affichage 315 et des moyens de saisie 316.

En revenant à la figure 1, l'étape 102 de transmission est suivie d'une étape 103 de traitement de la donnée numérique transmise à l'étape 102 au moyen du centre de traitement de données numériques 312. Cette étape 103 de traitement comporte sept étapes 104-110.

Plus précisément, dans une étape 104, le centre de traitement de données numériques 312 enregistre la donnée numérique transmise à l'étape 102.

Dans une étape 105, le centre de traitement de données numériques 312 détermine le contexte d'obtention de la donnée numérique enregistrée à l'étape 104 d'enregistrement d'une donnée numérique. Le contexte d'obtention de la donnée numérique comprend la nature de la donnée numérique, la région géographique 300 correspondant à la donnée numérique, le point de vue du capteur 311 ayant enregistré la donnée numérique et la gamme de résolution de la donnée numérique. La nature de la donnée numérique dépend du capteur 311 utilisé pour l'acquisition de la donnée numérique. Dans un exemple, la donnée est une cartographie, une donnée d'un système d'information géographique, une image radar, une image infrarouge, une image dans le domaine du visible. Des données de même nature peuvent être de type différent. Ainsi, un capteur infrarouge est apte à délivrer une donnée de type vidéo ou de type image fixe. Des données de type différent mais de même nature sont aptes à être fusionnées et sont dites conciliables. En revanche des données de nature différente ne sont pas conciliables.

La première phase comporte après l'étape 105 de détermination du contexte d'obtention une étape 106 de classification de la donnée numérique enregistrée à l'étape 104 en fonction du contexte d'obtention de ladite donnée numérique. Cette donnée numérique est alors classée dans un des groupes de données numériques de la base de connaissance 313, ledit groupe ayant le même contexte d'obtention que le contexte d'obtention de ladite donnée numérique, c'est-à-dire la même nature de donnée numérique, la même région géographique 300, le même point de vue du capteur 311 et la même gamme de résolution. Ledit groupe de données numériques est représenté par un modèle statistique. Ledit modèle statistique est créé à partir d'une donnée de référence. Dans un exemple, ladite donnée de référence est une ortho-image, un modèle numérique de terrain, un modèle numérique d'élévation ou un modèle en trois dimensions. Le terme " ortho-image " désigne ici des images de la surface terrestre.

La base de connaissance 313 comporte ainsi plusieurs niveaux d'indexation et d'exploitation. Dans un exemple un premier niveau concerne la nature de donnée numérique, un deuxième niveau concerne la région géographique 300 correspondant à la donnée numérique, un troisième niveau concerne le point de vue du capteur 311 ayant enregistré la donnée numérique et un quatrième niveau concerne la gamme de résolution de la donnée numérique.

La base de connaissance 313 est multimodale, ladite base de connaissance 313 comportant plusieurs natures de données provenant de capteurs 311 différents. De plus, une même région géographique 300 est représentée par différentes natures de données numériques, différents points de vue et différentes résolutions. En outre, la base de connaissance 313 est multilocalisée. Dans un exemple, une première donnée numérique correspond à une première région géographique 300 et un premier point de vue, une deuxième donnée numérique correspond à la première région géographique 300 et un deuxième point de vue et une troisième donnée numérique correspond à une deuxième région géographique 300 et au premier point de vue.

Dans une étape 107, les moyens de calcul 314 du centre de traitement de données numériques 312 déterminent des données statistiques sur la donnée numérique enregistrée à l'étape 104. Si la donnée numérique est une image dans le domaine du visible, les données statistiques sont par exemple l'écart type global de l'image et la moyenne globale de l'image. Dans un exemple, lorsque la donnée numérique est une image dans le domaine du visible, la détermination des données statistiques est effectuée à partir du niveau de gris de ladite image lorsque ladite image est en noir et blanc, ou à partir des niveaux de rouge, de vert et de bleu de ladite image lorsque ladite image est en couleur, ou encore à partir d'un champ de déplacement calculé à partir de ladite image.

Lorsqu'elle est enregistrée, la donnée numérique est d'abord mise en conformité avec les données de son groupe de données numériques conciliables. À cette fin le degré de compatibilité entre les données statistiques extraites de la donnée numérique enregistrée et le modèle statistique représentant son groupe de données numériques conciliables est déterminé (étape 108).

Ce degré de compatibilité est comparé à un seuil, au cours d'une étape de comparaison 109.

Si le degré de compatibilité est supérieur à ce seuil, alors la donnée numérique enregistrée ressemble beaucoup à celles du groupe de données numériques conciliables, et le système peut aisément effectuer la mise en conformité de manière automatique selon une étape 110.3.

Dans le cas contraire, la donnée numérique enregistrée est plus difficile à traiter automatiquement, et le système requiert l'intervention de l'opérateur. Une alerte est levée (étape 110.1) pour signaler à l'utilisateur que son intervention est requise. Le système détermine une procédure assurant un effort d'intervention minimal de la part de l'opérateur, tout en garantissant que le système pourra ensuite effectuer la mise en conformité.

La mise en conformité de la donnée incriminée est alors réalisée manuellement par l'opérateur au cours d'une étape préparatoire 110.2. À titre d'exemple, si la donnée numérique est une image dans le domaine du visible, l'opérateur effectue un recalage, c'est-à-dire associe un premier point de ladite image à un premier point d'une première image du groupe de données associé, puis un deuxième point de ladite image à un deuxième point de ladite première image du groupe de données associé et ainsi de suite pour un nombre de point minimal.

La réalisation de cette étape préparatoire permet alors au système de terminer la mise en conformité de manière automatique 110.3.

La mise en conformité permet ensuite la mise à jour automatique du modèle statistique.

Lors de la phase d'apprentissage, après l'étape de mise en conformité 110, la donnée numérique enregistrée est intégrée à son groupe de données numériques conciliables. Deux cas sont possibles selon que le groupe était vide ou non avant cette intégration.

Si le groupe était vide avant l'intégration de la donnée numérique enregistrée, alors selon l'étape 106 il a fallu créer le modèle statistique multilocalisé représentant le groupe. Pour cela, il a été utilisé à l'étape 106 une donnée de référence (plan à une altitude donnée, modèle numérique de terrain, modèle numérique d'élévation, modèle 3D...) modélisant le relief de la région considérée. Cette donnée de référence du relief est combinée avec les données statistiques de la donnée numérique enregistrée pour initialiser le modèle statistique multilocalisé représentant le groupe de données numériques conciliables.

Si le groupe n'était pas vide, alors le modèle statistique multilocalisé représentant le groupe de données numériques conciliables est mis à jour 111 afin qu'il prenne en compte l'intégration de la donnée numérique enregistrée. Pour cela, on modifie le modèle statistique multilocalisé pour qu'il représente le nouveau groupe de données numériques conciliables (incluant la donnée numérique enregistrée), par un mécanisme incrémental ne nécessitant pas de traiter à nouveau les données numériques déjà présentes dans le groupe.

Le modèle statistique utilisé est multilocalisé, ce qui signifie qu'il modélise localement l'aspect intrinsèque en de multiples points de la région géographique observée. Par exemple, sur une image satellitaire d'un aéroport, on peut observer simultanément les différentes pistes existantes la tour de contrôle, les parkings, les voies d'accès pour les usagers, etc.... En combinant une série d'observations, il est donc possible de modéliser localement l'aspect intrinsèque des différentes pistes, l'aspect intrinsèque de la tour de contrôle etc.... On obtient alors un modèle statistique que l'on peut qualifier de multilocalisé, car il est composé des modèles statistiques locaux correspondant aux multiples points de la région observée.

Le procédé est ainsi incrémental et évolutif. En effet, chaque nouvelle donnée numérique enregistrée permet de mettre à jour le modèle statistique. Le modèle statistique représente l'aspect intrinsèque habituel de la région géographique 300 associée.

Dans un exemple, les étapes 101 à 111 de la première phase 100 sont répétées jusqu'à ce que l'opérateur considère que la base de connaissance 313 est suffisamment complète pour pouvoir être exploitée dans la seconde phase 200.

Figure 2, la seconde phase 200 comporte une étape 201, dans laquelle le capteur 311 acquiert une donnée numérique correspondant à une région géographique 300 au moyen du capteur 311. La seconde phase 200 comporte ensuite une étape 202 de transmission de la donnée numérique acquise à l'étape 201 au centre de traitement de données numériques 312. L'étape 202 de transmission est suivie d'une étape 203 de traitement de la donnée numérique transmise à l'étape 202 au moyen du centre de traitement de données numériques 312. Cette étape 203 de traitement comporte huit étapes 104-111.

Les deux premières étapes 201 et 202 de la seconde phase 200 sont identiques aux deux premières étapes 101 et 102 de la première phase 100. De plus, les étapes 104 à 110 de la première phase 100 sont respectivement identiques aux étapes 204 à 210 de la seconde phase 200.

Plus précisément, dans une étape 204, le centre de traitement de données numériques 312 enregistre la donnée numérique transmise à l'étape 202.

Dans une étape 205, le centre de traitement de données numériques 312 détermine le contexte d'obtention de la donnée numérique enregistrée à l'étape 204 d'enregistrement d'une donnée numérique.

La seconde phase comporte après l'étape 205 de détermination du contexte d'obtention une étape 206 de classification de la donnée numérique enregistrée à l'étape 204 en fonction du contexte d'obtention de ladite donnée numérique. Cette donnée numérique est alors classée dans un des groupes de données numériques de la base de connaissance 313, ledit groupe ayant le même contexte d'obtention que le contexte d'obtention de ladite donnée numérique.

Dans une étape 207, les moyens de calcul 314 du centre de traitement de données numériques 312 déterminent des données statistiques sur la donnée numérique enregistrée à l'étape 204.

La seconde phase 200 comporte après l'étape 210 de mise en conformité des données statistiques une étape 211 de détermination, par les moyens de calcul 314, d'un degré de différence entre les données statistiques déterminées à ladite étape 204 de détermination de données statistiques et les données statistiques du modèle statistique dudit groupe de données.

Ladite étape 211 de détermination d'un degré de différence est suivie d'une étape 212 de comparaison dudit degré de différence avec un second seuil prédéfini. Ledit second seuil est modifiable à tout moment par l'opérateur.

Si le degré de différence est supérieur audit second seuil, une alerte destinée à l'opérateur est générée dans une étape 213. Cette alerte indique qu'une zone d'intérêt 301 a été détectée et comporte les coordonnées de la zone d'intérêt 301 dans une image de référence de la région géographique 300 comportant ladite zone d'intérêt 301. Ladite alerte est affichée par les moyens d'affichage 315 du centre de traitement de données numériques 312.

Dans une étape 214, l'opérateur évalue la pertinence de l'alerte générée grâce aux moyens de saisie 316 du centre de traitement de données numériques 312. Cette interaction avec l'opérateur permet audit opérateur de spécialiser le procédé en fonction de ce qui intéresse ledit opérateur. En effet, si l'opérateur indique que l'alerte concernant la zone d'intérêt 301 n'est pas pertinente, aucune alerte concernant ce type de zone d'intérêt 301 n'est générée ensuite.

Si l'opérateur indique que l'alerte concernant la zone d'intérêt 301 est pertinente et si l'opérateur souhaite obtenir des informations supplémentaires sur la zone d'intérêt 301, ledit opérateur manipule l'image de référence de la région géographique 300 comportant ladite zone d'intérêt 301 et effectue des recherches dans la base de connaissance 313.

## Revendications

1. Procédé semi-automatique d'analyse de données numériques correspondant à des régions géographiques (300) et de détection de zones d'intérêt (301) dans une région géographique par un moyen d'exploration (310) comportant un capteur (311) et un centre de traitement de données numériques (312), ledit procédé semi-automatique comportant une première phase (100) d'apprentissage de l'aspect intrinsèque de chaque région géographique (300), dans laquelle une base de connaissance multimodale et multilocalisée (313) comportant des groupes de données numériques représentés par des modèles statistiques multilocalisés, c'est-à-dire que chaque modèle statistique est composé des modèles statistiques locaux correspondants aux multiples points de la région observée, est créée, suivie d'une seconde phase (200) de détection de zones d'intérêt (301) dans les régions géographiques (300), lesdites phases (100, 200) comportant les étapes automatiques consistant à :
a. acquérir (101, 201) une donnée numérique correspondant à une région géographique (300) au moyen du capteur (311),
b. transmettre (102, 202) la donnée numérique acquise à l'étape a) au centre de traitement de données numériques (312) ;
c. traiter (103, 203) la donnée numérique transmise à l'étape b) au moyen du centre de traitement de données numériques (312),
ladite étape c) consistant à :
d. enregistrer (104, 204) la donnée numérique transmise à l'étape b),
e. déterminer (105, 205) le contexte d'obtention de la donnée numérique enregistrée à l'étape d),
f. classer (106, 206) la donnée numérique enregistrée à l'étape d) dans un groupe de données numériques de la base de connaissance (313) ayant le même contexte d'obtention que le contexte d'obtention déterminé à l'étape e), l'ensemble de données numériques dudit groupe de données numériques étant représenté par un modèle statistique,
g. déterminer (107, 207) des données statistiques sur la donnée numérique enregistrée à l'étape d),
h. Déterminer (108, 208) le degré de compatibilité entre les données statistiques déterminées à l'étape g) et des données statistiques du modèle statistique représentant le groupe de données numériques de l'étape f),
i. comparer (109, 209) ledit degré de compatibilité déterminé à l'étape h) avec un seuil prédéfini,
- la première phase (100) d'apprentissage de l'aspect intrinsèque de chaque région géographique (300) comportant en outre l'étape consistant à :
j. mettre à jour (111) le modèle statistique représentant le groupe de données numériques de l'étape f) grâce aux données statistiques déterminées à l'étape g),
- la seconde phase (200) de détection de zones d'intérêt (301) dans les régions géographiques (300) comportant en outre l'étape consistant à :
k. déterminer (211) un degré de différence entre les données statistiques et le modèle statistique dudit groupe de données déterminé à l'étape j)
l. générer (213) une alerte si le degré de différence entre les données statistiques de la donnée numérique enregistrée et le modèle statistique déterminé à l'étape j) est supérieur à un seuil prédéfini, ladite alerte indiquant la détection d'une zone d'intérêt (301),
et **caractérisé en ce que** ledit procédé comporte après l'étape l), l'étape consistant à :
n. évaluer (214) la pertinence de l'alerte générée à l'étape l) par un opérateur, grâce aux moyens de saisie (316) du centre de traitement de données numériques (312), pour lui permettre de spécialiser ledit procédé en fonction de ce qui l'intéresse, de façon à ce que si l'opérateur indique que l'alerte concernant la zone d'intérêt (301) n'est pas pertinente, aucune alerte concernant ce type de zone d'intérêt (301) n'est générée ensuite.

2. Procédé selon la revendication 1, lequel comprend à l'issue de l'étape i) une étape consistant à :
m. mettre (110) en conformité la donnée numérique enregistrée à l'étape d) avec les données numériques du groupe de données numériques de l'étape f).

3. Procédé selon la revendication 1, dans lequel, si le degré de compatibilité déterminé à l'étape h) est inférieur au seuil prédéfini, l'étape l) comporte les sous étapes consistant à :
mi. générer (110.1) une alerte indiquant qu'une mise en conformité de la donnée numérique enregistrée à l'étape d) avec des données numériques du groupe de données numériques de l'étape f) n'est pas possible,
mii. mettre en conformité (110.2) manuellement la donnée numérique enregistrée à l'étape d) avec les données numériques dudit groupe de données numériques de l'étape f),
miii. mettre automatiquement (110.3) en conformité le groupe de données numériques de l'étape f).

4. Procédé selon l'une des revendications 1 à 3, **caractérisé en ce que** le contexte d'obtention déterminé à l'étape e) comprend :
- la nature de la donnée numérique,
- la région géographique (300) correspondant à la donnée numérique,
- le point de vue du capteur (311) ayant enregistré la donnée numérique,
- la gamme de résolution de la donnée numérique.

5. Procédé selon l'une des revendications 1 à 4, dans lequel le moyen d'exploration (310) est compris dans un ensemble comportant un drone, un hélicoptère, un ballon, un avion et un satellite.

6. Procédé selon l'une des revendications 1 à 5, dans lequel le capteur (311) est compris dans un ensemble comportant une caméra, un appareil photographique et un radar.

7. Procédé selon l'une des revendications 1 à 6, dans lequel le centre de traitement des données numériques (312) est distant du moyen d'exploration (310).

8. Procédé selon l'une des revendications 1 à 7, dans lequel le centre de traitement des données numériques (312) comporte des moyens de calcul (314), des moyens d'affichage (315) et des moyens de saisie (316).

## Patentansprüche

1. Halbautomatisches Verfahren zur Analyse digitaler Daten entsprechend geografischen Gebieten (300) und zur Erkennung interessierender Bereiche (301) in einem geografischen Gebiet durch eine Abtasteinrichtung (310), die einen Sensor (311) und ein Verarbeitungszentrum digitaler Daten (312) aufweist, wobei das halbautomatische Verfahren eine erste Phase (100) des Lernens des intrinsischen Erscheinungsbilds jedes geografischen Gebiets (300), in der eine multimodale und multilokalisierte Wissensbank (313), die Gruppen digitaler Daten aufweist, die von multilokalisierten statistischen Modellen dargestellt werden, d.h. dass jedes statistische Modell aus lokalen statistischen Modellen zusammengesetzt ist, die den multiplen Punkten des beobachteten Gebiets entsprechen, erzeugt wird, gefolgt von einer zweiten Phase (200) der Erkennung interessierender Bereiche (301) in den geografischen Gebieten (300) aufweist, wobei die Phasen (100, 200) die automatischen Schritte aufweisen, die darin bestehen:
a. einen digitalen Datenwert entsprechend einem geografischen Gebiet (300) mittels des Sensors (311) zu erfassen (101, 201),
b. den im Schritt a) erfassten digitalen Datenwert an das Verarbeitungszentrum digitaler Daten (312) zu übertragen (102, 202);
c. den im Schritt b) übertragenen digitalen Datenwert mittels des Verarbeitungszentrums digitaler Daten (312) zu verarbeiten (103, 203);
wobei der Schritt c) darin besteht:
d. den im Schritt b) übertragenen digitalen Datenwert zu speichern (104, 204),
e. den Erhaltungskontext des im Schritt d) gespeicherten digitalen Datenwerts zu bestimmen (105, 205),
f. den im Schritt d) gespeicherten digitalen Datenwert in eine Gruppe digitaler Daten der Wissensbank (313) einzuordnen (106, 206), die den gleichen Erhaltungskontext wie der im Schritt e) bestimmte Erhaltungskontext haben, wobei die Gesamtheit der digitalen Daten der Gruppe digitaler Daten von einem statistischen Modell dargestellt wird,
g. statistische Daten über den im Schritt d) gespeicherten digitalen Datenwert zu bestimmen (107, 207),
h. den Kompatibilitätsgrad zwischen den im Schritt g) bestimmten statistischen Daten und statistischen Daten des statistische Modells zu bestimmen (108, 208), die die Gruppe digitaler Daten des Schritts f) darstellen,
i. den im Schritt h) bestimmten Kompatibilitätsgrad mit einer vordefinierten Schwelle zu vergleichen (109, 209),
- wobei die erste Phase (100) des Lernens des intrinsischen Erscheinungsbilds jedes geografischen Gebiets (300) außerdem den Schritt aufweist, der darin besteht:
j . das statistische Modell, das die Gruppe digitaler Daten des Schritts f) darstellt, mit Hilfe der im Schritt g) bestimmten statistischen Daten zu aktualisieren (111),
- wobei die zweite Phase (200) der Erkennung interessierender Bereiche (301) in den geografischen Gebieten (300) außerdem den Schritt aufweist, der darin besteht:
k. einen Differenzgrad zwischen den statistischen Daten und dem statistischen Modell der im Schritt j) bestimmten Gruppe von Daten zu bestimmen (211),
l. einen Alarm zu generieren (213), wenn der Differenzgrad zwischen den statistischen Daten des gespeicherten digitalen Datenwerts und dem im Schritt j) bestimmten statistischen Modell höher als eine vordefinierte Schwelle ist, wobei der Alarm die Erkennung eines interessierenden Bereichs (301) anzeigt,
und **dadurch gekennzeichnet, dass** das Verfahren nach dem Schritt l) den Schritt aufweist, der darin besteht:
n. die Relevanz des im Schritt l) generierten Alarms durch einen Bediener mit Hilfe der Eingabeeinrichtungen (316) des Verarbeitungszentrums digitaler Daten (312) zu ermitteln (214), um ihm zu ermöglichen, das Verfahren abhängig davon zu spezialisieren, was ihn interessiert, so dass, wenn der Bediener anzeigt, dass der Alarm betreffend den interessierenden Bereich (301) nicht relevant ist, kein Alarm betreffend diesen Typ von interessierendem Bereich (301) anschließend generiert wird.

2. Verfahren nach Anspruch 1, das nach dem Schritt i) einen Schritt enthält, der darin besteht:
m. den im Schritt d) gespeicherten digitalen Datenwert mit den digitalen Daten der Gruppe digitaler Daten des Schritts f) in Übereinstimmung zu bringen (110).

3. Verfahren nach Anspruch 1, wobei, wenn der im Schritt h) bestimmte Kompatibilitätsgrad unter der vordefinierten Schwelle liegt, der Schritt l) die Teilschritte aufweist, die darin bestehen:
mi. einen Alarm zu generieren (110.1), der anzeigt, dass es nicht möglich ist, den im Schritt d) gespeicherten digitalen Datenwert mit digitalen Daten der Gruppe digitaler Daten des Schritts f) in Übereinstimmung zu bringen,
mii. den im Schritt d) gespeicherten digitalen Datenwert mit den digitalen Daten der Gruppe digitaler Daten des Schritts f) manuell in Übereinstimmung zu bringen (110.2),
miii.die Gruppe digitaler Daten des Schritts f) automatisch in Übereinstimmung zu bringen (110.3).

4. Verfahren nach einem der Ansprüche 1 bis 3, **dadurch gekennzeichnet, dass** der im Schritt e) bestimmte Erhaltungskontext enthält:
- die Beschaffenheit des digitalen Datenwerts,
- das geografische Gebiet (300) entsprechend dem digitalen Datenwert,
- den Standpunkt des Sensors (311), der den digitalen Datenwert gespeichert hat,
- den Auflösungsbereich des digitalen Datenwerts.

5. Verfahren nach einem der Ansprüche 1 bis 4, wobei die Abtasteinrichtung (310) in einer Einheit enthalten ist, die eine Drohne, einen Hubschrauber, einen Ballon, ein Flugzeug und einen Satelliten aufweist.

6. Verfahren nach einem der Ansprüche 1 bis 5, wobei der Sensor (311) in einer Einheit enthalten ist, die eine Kamera, einen Fotoapparat und einen Radar aufweist.

7. Verfahren nach einem der Ansprüche 1 bis 6, wobei das Verarbeitungszentrum der digitalen Daten (312) von der Abtasteinrichtung (310) entfernt ist.

8. Verfahren nach einem der Ansprüche 1 bis 7, wobei das Verarbeitungszentrum der digitalen Daten (312) Recheneinrichtungen (314), Anzeigeeinrichtungen (315) und Eingabeeinrichtungen (316) aufweist.

## Claims

1. Semi-automatic method for analyzing digital data corresponding to geographical regions (300) and for detecting areas of interest (301) in a geographical region by an exploration means (310) comprising a sensor (311) and a center for processing digital data (312), said semi-automatic method comprising a first phase (100) of learning the intrinsic appearance of each geographical region (300), in which a multimodal and multilocalized knowledge base (313) comprising groups of digital data represented by multilocalized statistical models, that is to say each statistical model is composed of local statistical models corresponding to the multiple points of the region observed, is created, followed by a second phase (200) of detecting areas of interest (301) in the geographical regions (300), said phases (100, 200) comprising the automatic steps consisting in:
a. acquiring (101, 201) a digital data item corresponding to a geographical region (300) by means of the sensor (311),
b. transmitting (102, 202) the digital data item acquired in step a) to the center for processing digital data (312);
c. processing (103, 203) the digital data item transmitted in step b) by means of the center for processing digital data (312),
said step c) consisting in:
d. recording (104, 204) the digital data item transmitted in step b),
e. determining (105, 205) the context of obtainment of the digital data item recorded in step d),
f. classing (106, 206) the digital data item recorded in step d) into a group of digital data of the knowledge base (313) having the same context of obtainment as the context of obtainment determined in step e), the set of digital data of said group of digital data being represented by a statistical model,
g. determining (107, 207) statistical data on the digital data item recorded in step d),
h. determining (108, 208) the degree of compatibility between the statistical data determined in step g) and statistical data of the statistical model representing the group of digital data of step f),
i. comparing (109, 209) said degree of compatibility determined in step h) with a predefined threshold,
- the first phase (100) of learning the intrinsic appearance of each geographical region (300) furthermore comprising the step consisting in:
j. updating (111) the statistical model representing the group of digital data of step f) by virtue of the statistical data determined in step g),
- the second phase (200) of detecting areas of interest (301) in the geographical regions (300) furthermore comprising the step consisting in:
k. determining (211) a degree of difference between the statistical data and the statistical model of said data group determined in step j)
l. generating (213) an alert if the degree of difference between the statistical data of the recorded digital data item and the statistical model determined in step j) is greater than a predefined threshold, said alert indicating the detection of an area of interest (301),
and **characterized in that** said method comprises after step l), the step consisting in:
n. evaluating (214) the relevance of the alert generated in step l) by an operator, by virtue of the input means (316) of the center for processing digital data (312), so as to allow it to specialize said method as a function of what is of interest thereto in such a way that if the operator indicates that the alert relating to the area of interest (301) is not relevant, no alert relating to this type of area of interest (301) is generated thereafter.

2. Method according to Claim 1, which comprises, on completion of step i), a step consisting in:
m. harmonizing (110) the digital data item recorded in step d) with the digital data of the group of digital data of step f).

3. Method according to Claim 1, in which, if the degree of compatibility determined in step h) is less than the predefined threshold, step l) comprises the sub-steps consisting in:
mi. generating (110.1) an alert indicating that a harmonization of the digital data item recorded in step d) with digital data of the group of digital data of step f) is not possible,
mii. manually harmonizing (110.2) the digital data item recorded in step d) with the digital data of said group of digital data of step f),
miii.automatically harmonizing (110.3) the group of digital data of step f).

4. Method according to one of Claims 1 to 3, **characterized in that** the context of obtainment determined in step e) comprises:
- the nature of the digital data item,
- the geographical region (300) corresponding to the digital data item,
- the viewpoint of the sensor (311) that recorded the digital data item,
- the range of resolution of the digital data item.

5. Method according to one of Claims 1 to 4, in which the exploration means (310) is included in a set comprising a drone, a helicopter, a balloon, an airplane and a satellite.

6. Method according to one of Claims 1 to 5, in which the sensor (311) is included in a set comprising a camera, a photographic apparatus and a radar.

7. Method according to one of Claims 1 to 6, in which the center for processing the digital data (312) is remote from the exploration means (310).

8. Method according to one of Claims 1 to 7, in which the center for processing the digital data (312) comprises calculation means (314), display means (315) and input means (316).
